# EUROPEAN PATENT APPLICATION

(11) **EP 3 913 768 A1**
(43) Date of publication of application: **24.11.2021**
(21) Application number: 20769570.1
(22) Date of filing: 20.02.2020
(51) Int. Cl.: H02K 1/04, F04B 39/00, H02K 1/18, H02K 5/00, H02K 9/19

(54) **COMPRESSOR**

(30) Priority: 12.03.2019 JP 2019044351
(71) Applicant: DAIKIN INDUSTRIES, LTD., Osaka-shi, Osaka 530-8323 (JP)
(72) Inventor: HIRATSUKA Daisuke, Osaka-shi, Osaka 530-8323 (JP); NAKA Shoujirou, Osaka-shi, Osaka 530-8323 (JP)
(74) Representative: Goddar, Heinz J.
(86) International application number: PCT/JP2020/006784
(87) International publication number: WO 2020/184134

(57) **Abstract**

A compressor is provided with one or a plurality of fastening members (60) configured to fasten a stator (12) of a motor (10) to a predetermined support member (40), and an insulating member (70) having electrically insulating properties. The motor (10) is exposed to a refrigerant in a casing (30). The stator (12) has a fixing portion (12a) that is integral with or separate from the stator (12). One or a plurality of through holes (13) are formed in the fixing portion (12a). The insulating member (70) is provided between the fastening member (60) and a wall surface (13a) of the through hole (13). The insulating member (70) has a permittivity lower than a permittivity of the refrigerant.

## Description

### TECHNICAL FIELD

The present disclosure relates to a compressor.

### BACKGROUND ART

Insulating bolts are sometimes used for fastening of members that require electric insulation therebetween (see, e.g., Patent Document 1). In an example of Patent Document 1, the bolts are provided with electrically insulating tubes.

### CITATION LIST

### PATENT DOCUMENT

Patent Document 1: Japanese Utility Model Publication No. S60-128016

### SUMMARY OF THE INVENTION

### TECHNICAL PROBLEM

Although the members of the example of Patent Document 1 may be electrically insulated, it is desirable to further improve the insulation depending on the usage environment.

It is therefore an object of the present disclosure to improve the insulation in a motor of a compressor.

### SOLUTION TO THE PROBLEM

A first aspect of the present disclosure is directed to a compressor including:
a motor (10);
a compression mechanism (20) driven by the motor (10) and configured to compress a refrigerant;
a casing (30) configured to house the motor (10) and the compression mechanism (20);
one or a plurality of fastening members (60) configured to fasten a stator (12) of the motor (10) to a predetermined support member (40); and
an insulating member (70) having electrically insulating properties,
wherein
the motor (10) is exposed to the refrigerant in the casing (30),
the stator (12) has a fixing portion (12a) for fixing the stator (12) to the support member (40), the fixing portion (12a) being integral with the stator (12) or separate from the stator (12),
one or a plurality of through holes (13) are formed in the fixing portion (12a),
the insulating member (70) is provided between the fastening member (60) and a wall surface (13a) of the through hole (13), and
the insulating member (70) has a permittivity lower than a permittivity of the refrigerant.

In the first aspect, the insulating member (70) has a permittivity lower than a permittivity of the refrigerant. Thus, in the present aspect, the insulating properties of the motor of the compressor may be improved.

A second aspect of the present disclosure is an embodiment of the first aspect. In the second aspect, the compressor further includes:
a washer (80) formed in an annular shape and having electrically insulating properties, wherein
the stator (12) is insulated from the fastening member (60) by the washer (80), and
the insulating member (70) is formed in a cylindrical shape and disposed so as to leave a gap (W1, W2), in an axial direction of the fastening member (60), with respect to a member (80, 90, 96) opposed to the insulating member (70) in the axial direction.

A third aspect of the present disclosure is an embodiment of the second aspect. In the third aspect,
the insulating member (70) has an end surface (71) in the axial direction, the end surface (71) not overlapping with the washer (80) as viewed from the axial direction.

In the second and third aspects, there is a gap (W1, W2) in the axial direction between the insulating member (70) and the member (80, 90, 96) facing the insulating member (70). Thus, in the present aspect, no stress due to fastening of the fastening member (60) acts on the insulating member (70) in the axial direction.

A fourth aspect of the present disclosure is an embodiment of the second aspect. In the fourth aspect,
the insulating member (70) has an end surface (71) in the axial direction, at least a part of the end surface (71) overlapping with the washer (80) as viewed from the axial direction, and
a gap in the axial direction is provided between the washer (80) and a portion of the insulating member (70) overlapping with the washer (80).

In the fourth aspect, there is a gap (W1, W2) in the axial direction between the insulating member (70) and the washer (80) opposed to the insulating member (70). Thus, in the present aspect, no stress due to fastening of the fastening member (60) acts on the insulating member (70) in the axial direction.

A fifth aspect of the present disclosure is an embodiment of any one of the first to fourth aspects. In the fifth aspect,
the insulating member (70) is made of a material selected from a group consisting of polyphenylene sulfide, liquid crystal polymer, polybutene terephthalate, and epoxy resin.

A sixth aspect of the present disclosure is an embodiment of any one of the second to fourth aspects. In the sixth aspect,
the washer (80) is made of ceramics.

### BRIEF DESCRIPTION OF THE DRAWINGS

FIG. 1 is a cross-sectional view of a compressor of a first embodiment.
FIG. 2 is another cross-sectional view of the compressor.
FIG. 3 illustrates a fixed state of a stator and a bracket.
FIG. 4 is a cross-sectional view of a vicinity of a bracket of a variation of the first embodiment.
FIG. 5 is a cross-sectional view of a compressor of a second embodiment.
FIG. 6 illustrates another exemplary configuration of a washer.
FIG. 7 illustrates another exemplary configuration of a fixing portion.

### DESCRIPTION OF EMBODIMENTS

### «First Embodiment»

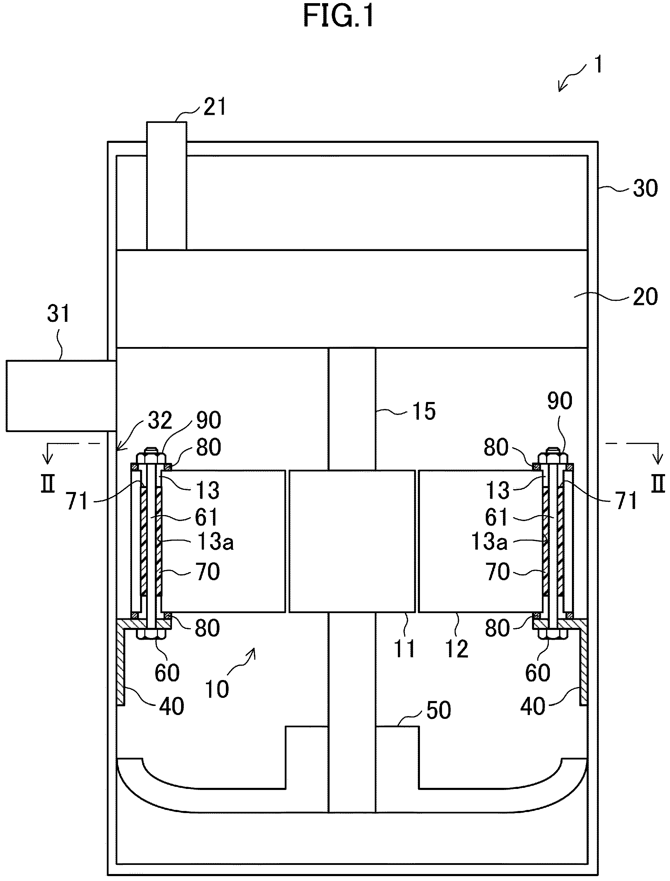

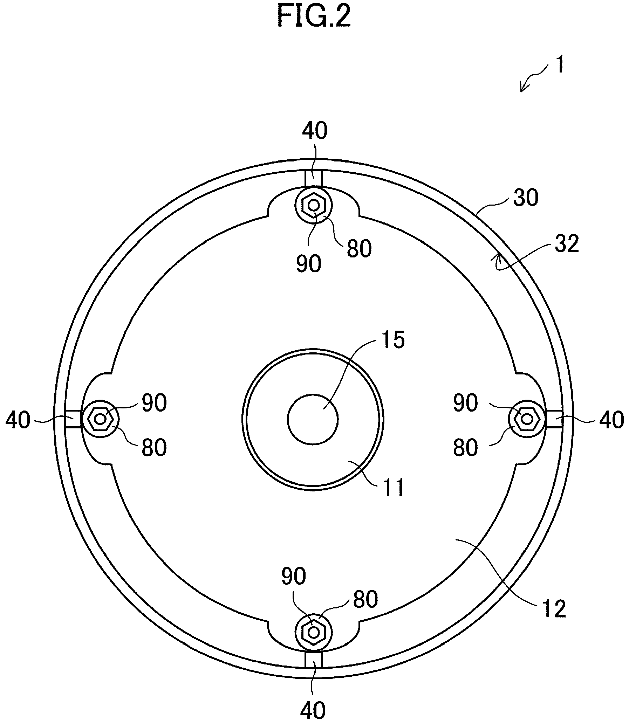

FIG. 1 is a cross-sectional view of a compressor (1) of a first embodiment. As illustrated in FIG. 1, the compressor (1) includes a motor (10), a compression mechanism (20), a casing (30), brackets (40), and a bearing (50). FIG. 2 is another cross-sectional view of the compressor (1). FIG. 2 is a cross section orthogonal to the cross section of FIG. 1. FIG. 2 corresponds to the cross section taken along the line II-II in FIG. 1. Members (a permanent magnet, a coil, etc.) normally provided in the motor (10) are omitted in FIG. 2.

The casing (30) is a cylindrical member with both ends closed. The casing (30) is made of a metal member such as iron. The casing (30) is electrically conductive. The casing (30) is provided with a suction pipe (21) for sucking a refrigerant and a discharge pipe (31) for discharging the refrigerant. The suction pipe (21) and the discharge pipe (31) are connected to a pipe of a refrigerant circuit (not shown).

In this example, the motor (10) is a so-called interior permanent magnet motor (IPM motor). The motor (10) includes a rotor (11), a stator (12), and a drive shaft (15).

The rotor (11) is formed by laminating magnetic steel sheets, for example. The rotor (11) has a permanent magnet (not shown) embedded therein. The drive shaft (15) is fitted in the center of the rotor (11). In this example, the rotor (11) and the drive shaft (15) are fixed by a so-called shrink-fitting. One end of the drive shaft (15) is connected to the compression mechanism (20) and the other end of the drive shaft (15) is supported by the bearing (50) (see FIG. 1).

The stator (12) is formed by laminating magnetic steel sheets, for example. The stator (12) is provided with a plurality of coils (not shown) forming an electromagnet. A peripheral portion (a so-called back yoke) on the outer side of the stator (12) functions as a fixing portion (12a) for fixing the stator (12). The fixing portion (12a) has a plurality of through holes (13) formed therein at an equal pitch in the circumferential direction (see FIG. 2). In this example, the through holes (13) are provided at the pitch of 90°. These through holes (13) are used in fixing the stator (12) (described in detail later). These through holes (13) are circular holes. Each of the through holes (13) (circular holes) has a diameter that allows an insulating member (70), which will be described later, to be inserted therein.

The motor (10) is fixed to the inside of the casing (30). Specifically, the stator (12) is fixed to the casing (30) via brackets (40). Fixing of the motor (10) (stator (12)) and the casing (30) will be described later.

In this example, the compression mechanism (20) is a so-called scroll compression mechanism. The compression mechanism (20) is housed in the casing (30). Specifically, the compression mechanism (20) is press-fitted into the casing (30). A suction pipe (21) is connected to the compression mechanism (20). The compression mechanism (20) is driven by the drive shaft (15).

When the motor (10) is driven, the compression mechanism (20) sucks the refrigerant (e.g., R32, R410A, etc.) from the suction pipe (21). The compression mechanism (20) compresses the sucked refrigerant. The compression mechanism (20) discharges the compressed refrigerant into the casing (30). The motor (10) is exposed to the refrigerant in the casing (30). The refrigerant discharged into the casing (30) is discharged from the discharge pipe (31).

The brackets (40) are members for fixing the motor (10) (more specifically, the stator (12)) to the casing (30). In this example, the number of brackets (40) is equal to the number of through holes (13) of the stator (12) (see FIG. 2). As illustrated in FIG. 1, each of the brackets (40) is a member having an L-shape in a cross section. The brackets (40) are made of a metal member such as iron. The brackets (40) are electrically conductive.

A through hole (41) corresponding to each of the through holes (13) of the stator (12) is formed in each of the brackets (40). These brackets (40) are fixed by welding to an inner peripheral surface (32) of the casing (30) at positions where the through holes (41) of the brackets (40) correspond to the through holes (13) of the stator (12). Welding the brackets (40) to the casing (30) results in an electrical connection between them.

### <Fixing of Motor and Casing>

As described earlier, the stator (12) is fixed to the casing (30) via brackets (40). In the fixing, a bolt (60), an insulating member (70), washers (80), and a nut (90) are used.

In this example, the bolt (60) is a so-called hexagonal bolt. The bolt (60) is made of metal such as iron. The bolt (60) is electrically conductive. The bolt (60) includes a barrel (61) and a head (62). A male screw is formed on the barrel (61). As illustrated in FIG. 1, the barrel (61) is inserted into the through hole (41) provided in the bracket (40). The head (62) is of a size that does not pass through the through hole (41). The head (62) is in contact with the bracket (40).

In this example, the nut (90) is a so-called hexagonal nut. The nut (90), too, is made of metal such as iron. The nut (90) is electrically conductive.

The insulating member (70) is a cylindrical member. A through hole (72) is formed in the insulating member (70) in the axial direction (the axial direction of the cylindrical shape). The through hole (72) has a diameter that allows the barrel (61) of the bolt (60) to pass therethrough. In a state in which the barrel (61) is inserted in the through hole (72), there is almost no gap in the radial direction between the barrel (61) and the insulating member (70) where the through hole (72) is formed.

The insulating member (70) has electrically insulating properties. The insulating member (70) is made of a material having a permittivity lower than the refrigerant. Specifically, in this example, the insulating member (70) is made of polyphenylene sulfide (abbreviated as PPS).

The washers (80) are annular members. Two washers (80) are used for one bolt (60). In the following description, if a distinction between a plurality of members such as the washers (80) is necessary, sub-numbers will be added to the reference characters (e.g., 80-1, 80-2).

The washers (80) have electrically insulating properties. In this example, the washers (80) are made of ceramics. More specifically, the washers (80) are made of alumina. The inner diameter of the through hole of the washer (80) is larger than the outer diameter of the insulating member (70).

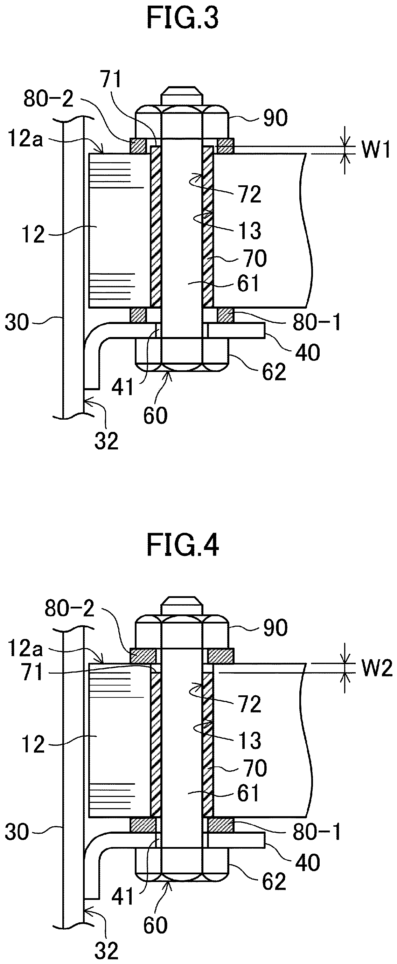

FIG. 3 illustrates a fixed state of the stator (12) and the bracket (40). In the present embodiment, in the state in which the stator (12) is fixed to the bracket (40), there is a gap between the outer peripheral surface of the stator (12) and the inner peripheral surface (32) of the casing (30).

In this example, the brackets (40) are attached to the casing (30) in advance. The bolt (60) is attached to each of the brackets (40). Specifically, the head (62) of the bolt (60) is fixed to the bracket (40) by welding. After the bolt (60) is fixed to the bracket (40), a washer (80-1) is fitted to the bolt (60) (see FIG. 3).

In this example, the stator (12) is attached after the bracket (40), the bolt (60), and the washer (80-1) are disposed in the casing (30). The washer (80-1) is interposed between the stator (12) and the bracket (40). The insulating member (70) is fitted onto the barrel (61) of the bolt (60). In other words, the insulating member (70) is provided between the bolt (60) and a wall surface (13a) of the through hole (13) of the stator (12). In a state in which the insulating member (70) is fitted into the through hole (13) of the stator (12), there is almost no gap between the insulating member (70) and the stator (12) in the radial direction.

The nut (90) is fastened to the bolt (60). The nut (90) and the stator (12) are electrically insulated by a washer (80-2). As illustrated in FIG. 3, an end surface (71) of the insulating member (70) in the axial direction (the axial direction of the bolt (60)) does not overlap with the washers (80) as viewed from the axial direction. This is because the inner diameter of the through hole of the washer (80) is larger than the outer diameter of the insulating member (70). The length of the insulating member (70) in the axial direction is set so that a gap in the axial direction is formed with respect to a member (here, the nut (90)) opposed to the insulating member (70) in the axial direction of the bolt (60).

In summary, the present embodiment includes: a motor (10); a compression mechanism (20) driven by the motor (10) and configured to compress a refrigerant; a casing (30) configured to house the motor (10) and the compression mechanism (20); one or a plurality of fastening members (60) configured to fasten a stator (12) of the motor (10) to a predetermined support member (40); and an insulating member (70) having electrically insulating properties.

The motor (10) is exposed to the refrigerant in the casing (30). The stator (12) has a fixing portion (12a) for fixing the stator (12) to the support member (40), and the fixing portion (12a) is integral with the stator (12). One or a plurality of through holes (13) are formed in the fixing portion (12a). The insulating member (70) is provided between the fastening member (60) and a wall surface (13a) of the through hole (13). The insulating member (70) has a permittivity lower than a permittivity of the refrigerant.

With the foregoing fastening structure, the stator (12) is electrically insulated from the bolt (60), the nut (90), and the bracket (40).

### <Advantages of Embodiment>

In the present embodiment, the insulating member (70) has a permittivity lower than a permittivity of the refrigerant. In this example, the permittivity of the refrigerant is 14.27 at 23°C and 11.27 at 40°C. The permittivity of the PPS used as a material for the insulating member (70) is 4.2. In the present embodiment, the insulating properties are improved as compared to the case in which the inside (the gap between the bolt and the stator) of the through hole (13) of the stator (12) is filled with the refrigerant. In the present embodiment, the insulating properties of the motor (10) of the compressor (1) may be improved.

The insulating member (70) may be made of ceramics instead of resin (PPS in this example). However, resin is more advantageous in terms of permittivity (insulating properties) than ceramics. Alumina is an example of ceramics, and its permittivity is 8.4.

Unnecessary stress that acts on the insulating member (70) may decrease the durability of the insulating member (70), depending on the atmosphere (e.g., the presence of a lubricant). There is no such an issue in the present embodiment. The insulating member (70) of the present embodiment has a gap in the axial direction with respect to the nut (90) and the washer (80) in the axial direction of the bolt (60). Thus, even if the nut (90) is fastened to the bolt (60), no stress acts on the insulating member (70) in the axial direction.

In the present embodiment, the washer (80) is made of ceramics. Thus, even when the bolt (60) and the nut (90) are fastened and stress acts on the washer (80), the durability of the washer (80) is sufficient.

### «Variation of First Embodiment»

FIG. 4 is a cross-sectional view of the vicinity of the bracket (40) of a variation of the first embodiment. In this example, the shape of the washer (80) is different from that in the first embodiment.

In the present variation, as illustrated in FIG. 4, the inner diameter of the through hole of the washer (80) is smaller than the outer diameter of the insulating member (70). Thus, at least a part of the end surface (71) of the insulating member (70) in the axial direction of the bolt (60) overlaps with the washer (80) as viewed from the axial direction.

The length of the insulating member (70) in the axial direction is set so that a gap (W2) in the axial direction is formed with respect to a member (here, the washer (80)) opposed to the insulating member (70) in the axial direction of the bolt (60). Thus, even if the nut (90) is fastened to the bolt (60), no stress acts on the insulating member (70) in the axial direction. In other words, in the present variation, the durability of the insulating member (70) does not decrease even in an atmosphere where, for example, a lubricant is present.

### «Second Embodiment»

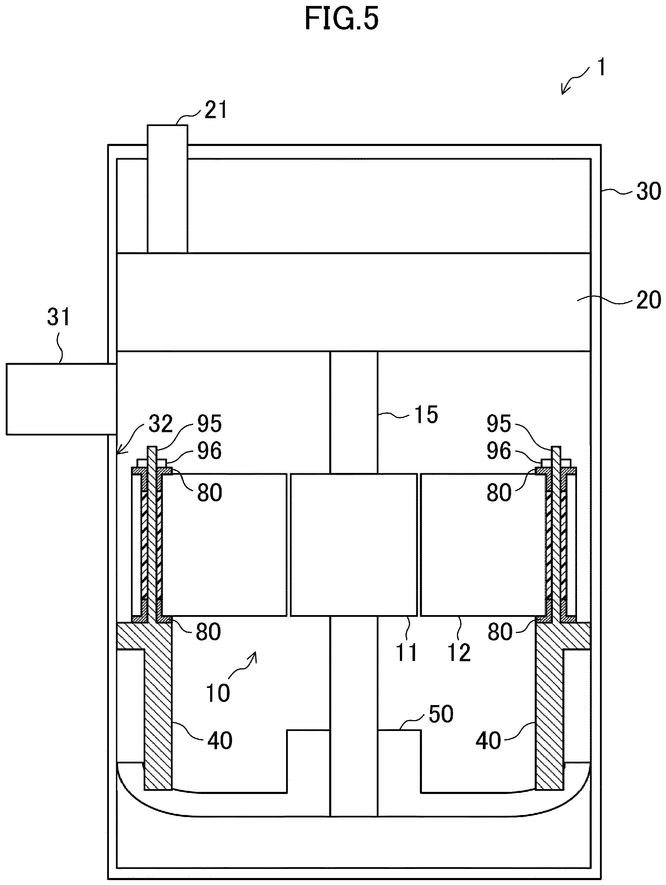

FIG. 5 is a cross-sectional view of a compressor (1) of a second embodiment. In the present embodiment, the fastening structure of a stator (12) is different from that of the first embodiment. Specifically, in the present embodiment, a pin (95) and a fixing ring (96) are used instead of the bolt (60).

The pin (95) is integral with the bracket (40). The pin (95) is made of metal such as iron. The pin (95) passes through a through hole (72) of an insulating member (70). In a state in which the pin (95) is inserted in the through hole (72), there is almost no gap in the radial direction between the pin (95) and the insulating member (70) where the through hole (72) is formed.

The fixing ring (96) is an annular member. The fixing ring (96) has a through hole for press fitting the pin (95). The fixing ring (96) has an outer diameter that does not pass through the through hole (13) of the stator (12). The fixing ring (96) is made of metal such as iron. The fixing ring (96) is electrically conductive.

Also in this example, the brackets (40) are attached to the casing (30) in advance. The washer (80-1) is interposed between the stator (12) and the bracket (40). The insulating member (70) is fitted onto the pin (95). In other words, the insulating member (70) is provided between the pin (95) and a wall surface (13a) of the through hole (13) of the stator (12). In a state in which the insulating member (70) is fitted into the through hole (13) of the stator (12), there is almost no gap between the insulating member (70) and the stator (12) in the radial direction.

The fixing ring (96) is press fitted to the distal end of the pin (95). The fixing ring (96) and the stator (12) are electrically insulated from each other by a washer (80-2). With this press fitting, the fixing ring (96) presses the stator (12) via the washer (80-2).

As illustrated in FIG. 5, in this example, too, the end surface (71) of the insulating member (70) in the axial direction of the pin (95) does not overlap with the washer (80) as viewed from the axial direction. The length of the insulating member (70) in the axial direction is set so that a gap (W1) in the axial direction is formed with respect to a member (here, the fixing ring (96)) opposed to the insulating member (70) in the axial direction of the pin (95).

### <Advantages of Embodiment>

With the foregoing fastening structure, the stator (12) is electrically insulated from the pin (95), the fixing ring (96), and the bracket (40). The present embodiment provides the same advantages as the first embodiment.

### «Other Embodiments»

The embodiments described above may be modified as follows.

In the first embodiment, the nut (90) may be fastened to only some of the bolts (60).

The positional relation of the bolt (60) and the nut (90) may be reversed. Specifically, the stator (12) may be fixed by attaching the nut (90) to the bracket (40) and screwing the bolt (60) into the nut (90). In this case, too, the insulating member (70) and the washer (80) are disposed just like in the first embodiment.

In the second embodiment, the fixing ring (96) may be provided for only some of the pins (95).

The number of bolts (60) of the first embodiment and the number of pins (95) of the second embodiment are exemplary. The bolts (60) and the pins (95) may be provided at unequal pitches.

The material of the insulating member (70) is merely an example. In addition to PPS, examples of the material of the insulating member (70) include polybutene terephthalate (abbreviated as PBT), liquid crystal polymer (abbreviated as LCP), epoxy resin, phenol resin, polyesters, polyimide, polyetheretherketone (abbreviated as PEEK), varnish, polyamides (e.g., nylon), and so on. Note that examples of the polyesters include alkyd resin, polyethylene terephthalate (abbreviated as PET), and polyethylene naphthalate (abbreviated as PEN).

The material of the washer (80) (ceramics) is also an example. Instead of alumina, zirconia may be used, for example.

The compression mechanism is an example, as well. In addition to the scroll compression mechanism, examples of the compression mechanism may include, for example, a rotary compression mechanism.

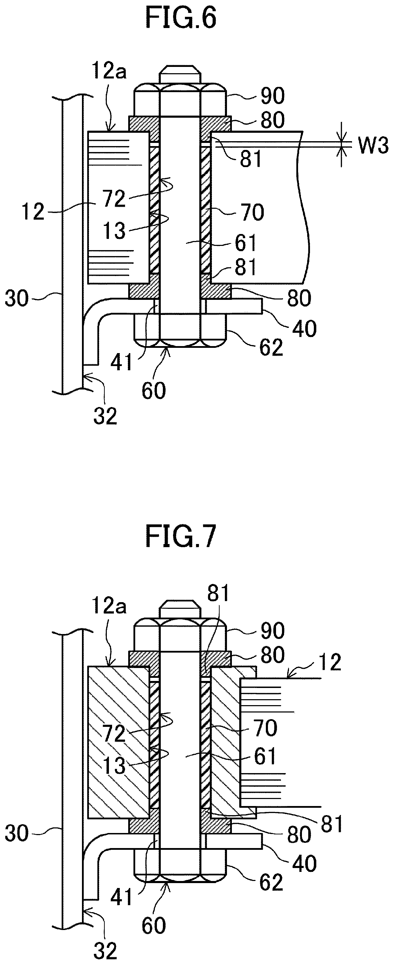

The shape of the washer (80) is also an example. For example, a flanged sleeve may be used as the washer (80) (see FIG. 6). In the example of FIG. 6, a sleeve portion (81) (cylindrical portion) of the washer (80) is fitted into the through hole (13) of the stator (12). A gap (W3) is formed between the end surface of the insulating member (70) and the end surface of the sleeve portion (81). Thus, even if the nut (90) is fastened to the bolt (60), no stress acts on the insulating member (70) in the axial direction. The washer (80) of FIG. 6 may be also applied to the second embodiment.

The fixing portion (12a) is not necessarily integral with the stator (12). FIG. 7 illustrates another example of a configuration of the fixing portion (12a). In FIG. 7, the stator (12) and the fixing portion (12a) are separate.

Instead of using a tubular member, the insulating member (70) may be formed by pouring molten resin having flowability or by pouring and hardening thermosetting resin.

While the embodiments and the variations thereof have been described above, it will be understood that various changes in form and details may be made without departing from the spirit and scope of the claims. The foregoing embodiments and variations thereof may be combined and replaced with each other without deteriorating the intended functions of the present disclosure.

### INDUSTRIAL APPLICABILITY

As described above, the present disclosure is useful for a compressor.

### DESCRIPTION OF REFERENCE CHARACTERS

- 1: Compressor
- 10: Motor
- 12: Stator
- 13: Through Hole
- 13a: Wall Surface
- 20: Compression Mechanism
- 30: Casing
- 40: Bracket (Support Member)
- 60: Bolt (Fastening Member)
- 70: Insulating Member
- 71: End Surface
- 80: Washer
- 90: Nut
- 96: Fixing Ring
- W1, W2: Gap

## Claims

1. A compressor comprising:
a motor (10);
a compression mechanism (20) driven by the motor (10) and configured to compress a refrigerant;
a casing (30) configured to house the motor (10) and the compression mechanism (20);
one or a plurality of fastening members (60) configured to fasten a stator (12) of the motor (10) to a predetermined support member (40); and
an insulating member (70) having electrically insulating properties,
wherein
the motor (10) is exposed to the refrigerant in the casing (30),
the stator (12) has a fixing portion (12a) for fixing the stator (12) to the support member (40), the fixing portion (12a) being integral with the stator (12) or separate from the stator (12),
one or a plurality of through holes (13) are formed in the fixing portion (12a),
the insulating member (70) is provided between the fastening member (60) and a wall surface (13a) of the through hole (13), and
the insulating member (70) has a permittivity lower than a permittivity of the refrigerant.

2. The compressor of claim 1, further comprising:
a washer (80) formed in an annular shape and having electrically insulating properties, wherein
the stator (12) is insulated from the fastening member (60) by the washer (80), and
the insulating member (70) is formed in a cylindrical shape and disposed so as to leave a gap (W1, W2), in an axial direction of the fastening member (60), with respect to a member (80, 90, 96) opposed to the insulating member (70) in the axial direction.

3. The compressor of claim 2, wherein
the insulating member (70) has an end surface (71) in the axial direction, the end surface (71) not overlapping with the washer (80) as viewed from the axial direction.

4. The compressor of claim 2, wherein
the insulating member (70) has an end surface (71) in the axial direction, at least a part of the end surface (71) overlapping with the washer (80) as viewed from the axial direction, and
a gap in the axial direction is provided between the washer (80) and a portion of the insulating member (70) overlapping with the washer (80).

5. The compressor of any one of claims 1 to 4, wherein
the insulating member (70) is made of a material selected from a group consisting of polyphenylene sulfide, liquid crystal polymer, polybutene terephthalate, and epoxy resin.

6. The compressor of any one of claims 2 to 4, wherein
the washer (80) is made of ceramics.
